Europäisches Patentamt

(19) European Patent Office

Office européen des brevets

(11) Publication number : **0 363 567 B1**

(12) **EUROPEAN PATENT SPECIFICATION**

(45) Date of publication of patent specification :
30.11.94 Bulletin 94/48

(51) Int. Cl.⁵ : **G06F 1/08**

(21) Application number : **89111349.0**

(22) Date of filing : **22.06.89**

(54) **A computer with interrupt controlled clock speed and its method of operation.**

(30) Priority : **14.10.88 US 257664**

(43) Date of publication of application :
**18.04.90 Bulletin 90/16**

(45) Publication of the grant of the patent :
**30.11.94 Bulletin 94/48**

(84) Designated Contracting States :
**DE FR GB**

(56) References cited :
**EP-A- 0 242 010
US-A- 3 953 835
US-A- 4 819 164
ELECTRONIC DESIGN, vol. 31, no. 24, November 1983, pages 125-132, Waseca, MN, DENVILLE, NJ, US; H.W. LOOK: "CLOCK CHIP MATES FAST muPs WITH SLOWER DEVICES"**

(73) Proprietor : **International Business Machines
Corporation
Old Orchard Road
Armonk, N.Y. 10504 (US)**

(72) Inventor : **Antanaitis, Benjamin Charles, Jr.
1801 Tartan Court
Charlotte, NC 28212 (US)**
Inventor : **Emerson, William Blaine, Jr.
13901 Creekside Drive
Matthews, NC 28105 (US)**
Inventor : **St. John, Joseph Winfield
204 Union Street North
Concord, NC 28025 (US)**

(74) Representative : **Schäfer, Wolfgang, Dipl.-Ing.
IBM Deutschland Informationssysteme GmbH
Patentwesen und Urheberrecht
D-70548 Stuttgart (DE)**

## Description

This invention relates to computers, and more particularly to a control system and its method of operation for controlling the execution speed of a computer to permit it to operate with circuits having binary switching speeds slower than the computer circuit switching speed.

Variable cycle time microcomputers are known in the prior art. US Patent 4,509,120 shows a device for use with a microcomputer. The device is arranged with a parameter latch register for storing a binary value representing a desired access cycle delay. The delay is accomplished by forcing the microprocessor to the not ready state, thereby providing additional time for a device to respond to a write or read command. The parameter latch register is adapted to receive the binary value, either during manufacture or during the execution of instructions.

Likewise, US Patent 4,050,096 provides pulse expansion for microprocessor systems with slow memory. Logic circuitry expands the clock pulse which is applied to the microprocessor chip whenever a memory location is addressed which has a longer access time than is consistent with the width of the pulse ordinarily supplied to the microprocessor.

Also, it is known to operate at different sampling rates when communicating over different communication lines. U.S. Patent 3,909,791 shows such a system.

In EP-A-242 010 a clock circuit is disclosed for supplying a clock signal to a data processor, said clock circuit being arranged to supply the clock signal at one of a range of frequencies, under the control of the data processor. The processor can instruct the circuit to supply the clock signal at a maximum frequency to provide maximum data processing capacity or it can instruct it to supply a signal at a selected lower frequency in order to reduce power consumption.

The system of the preferred embodiment of the invention uses interrupt levels to control the clock speed of a computer so as to permit it to operate synchronously with circuits not capable of operating at the maximum computer speed. For example, circuit cards which have been designed to operate with personal computers at 4 megahertz will not operate at the 10 or 20 megahertz clock rate of later generation computers. By use of this invention, the clock speed of the newer computer need not be permanently reduced to the speed of the slowest circuit card. The interrupt levels used to control the clock speed may be implemented in hardware or may be programs which execute logical decisions based upon the identity of the interrupting entity. This interrupting entity may be an input/output device adapter, a co-processor or other device, as well as a program executing in the computer. One example of a situation where it is desirable to execute a program at less than the maximum computer speed is when an error recovery program is executing. Since the error may have been caused by computer circuits operating at high speed, execution at a slower speed provides for more reliable computer error diagnosis.

An advantageous effect of this invention is that it permits the computer to operate compatibly with circuits that require longer cycle times due to semiconductor technology or circuit complexity while at the same time permitting the computer to operate at maximum speed when the particular circuits are not involved in operation of the computer.

It is a further advantage of the invention that such circuits requiring longer cycle times need not be changed in any way to be compatible with the computer of the invention.

Another advantage is that the device driver programs which serve these slower speed I/O adapters may also be used with the invention without change.

Furthermore, these device drivers may even serve both low and high speed I/O adapters in the computer of the invention. This is advantageous, for example, if the computer has a diskette I/O adapter with circuits designed to run at 200 nanosecond cycle times and also has a hard disk drive adapter designed to meet the same software interface but having circuits that can operate at 100 nanosecond cycles.

These and other advantages of the invention are accomplished by placing each of the different speed adapters on different interrupt levels in the computer of the invention. The interrupt handler changes the speed of the computer to match the speed of the interrupting adapter prior to passing control to the device driver program.

The present invention is defined in the attached claims.

Fig. 1 shows a system block diagram of a computer using the invention.

Fig. 2 is an example system clock used with the invention.

Fig. 3 shows the detailed connections of interrupt request lines with processor 11.

Fig. 4 is a flow diagram of the invention in operation.

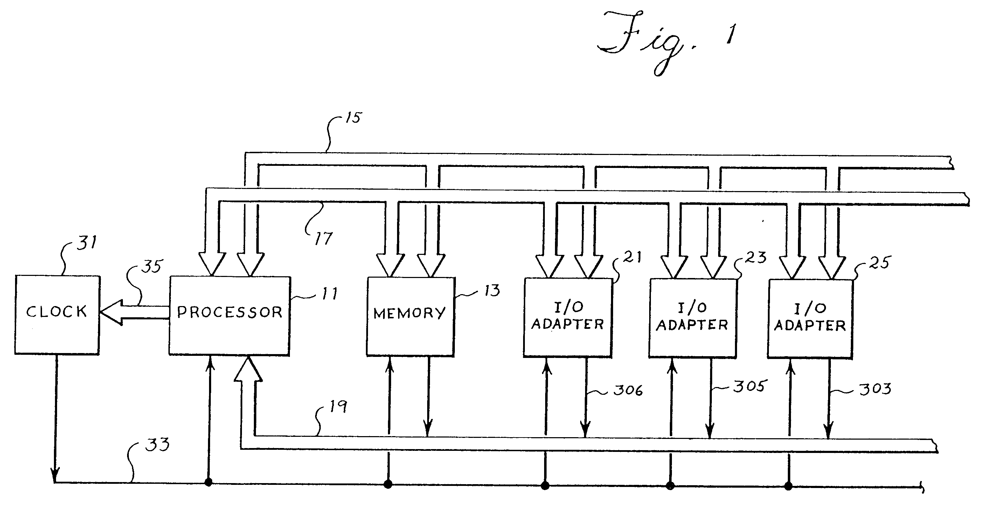

Fig. 1 shows the organization of the computer hardware in block diagram form. A conventional computer processor, which includes the arithmetic logic unit and address and execution control units, is shown in block 11. The processor 11 provides addresses to, and data to and from, memory 13 on buses 15 and 17. Connected in parallel with memory 13 are a plurality of I/O adapters 21, 23 and 25. These adapters indicate to processor 11 when service is required by placing a signal on one of the wires of interrupt request bus 19. All of these circuits 11, 13, and 21-25 are kept in synchronism by a system clock 31 which provides a train of clock pulses on output line 33. The frequency of the output pulses provided on line 33 is controlled by a data word that has been transferred from processor 11 to system clock 31 over clock control line 35. In this example, adapters 21 and 23 can operate at 100 nanosecond clock cycles, but adapter 25 requires 200 nanosecond cycles in order to properly receive addressed commands from processor 11, and to send data and status to processor 11.

Interrupt request bus 19 has 8 separate wires in this example of 0-7 interrupts. Each wire is connected through a resistor to a voltage source. An interrupt request is generated by the requesting I/O adapter by connecting one of the interrupt request wires to ground level or 0 volts. This polarity of interrupt request signal makes it possible for multiple I/O adapters to share the same interrupt level. When sharing an interrupt level, the output signals are driven with an open collector line driver. The wires of interrupt request bus 19 are voltage level sensitive, rather than responding to the rising or falling edge of a pulse. Further detailed explanation of the operation of interrupts appears on pages 2-63, 64, 65 and 3-29, 30 in the IBM Personal System/2 (PM) Model 80 Technical Reference Manual, copyright International Business Machines Corporation, 1987.

Each of the input/output adapters 21, 23, 25 is implemented either in hard-wired logic circuits or as a micro-programmed microprocessor with its own oscillator and clock to operate at its own frequency. The logic circuits or microprocessor stores binary data in various registers, including the status register, and moves binary data to and from a data register, all at its own clock speed. This clock speed may be significantly slower than the clock speed at which processor 11 is capable of operating. The system clock control line 35 provides the synchronizing signal to each I/O adapter circuit so that the adapter might be aware of when data placed in its data register by processor 11 is valid and, alternately, when processor 11 expects data in the data register of an adapter to be valid for reading. Such input/output adapter circuits have been in use for some time. An example of such an input/output adapter appears in U.S. Patent 4,006,465, the teachings of which are hereby incorporated by reference. The adapter disclosed in this patent connects a communication loop to a processor, using a microprocessor of its own having an arithmetic logic unit, read-only memory, etc.

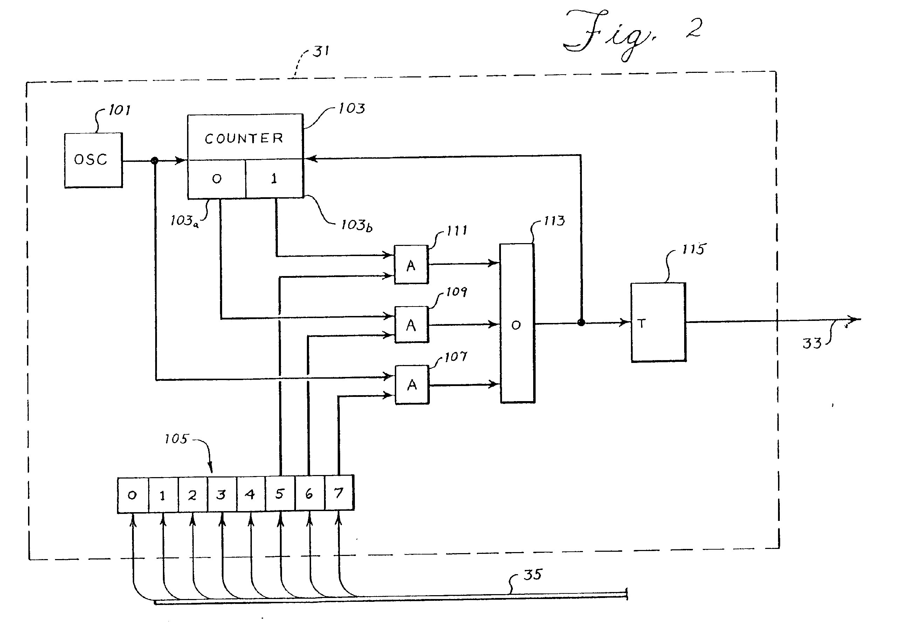

Fig. 2 shows an example of a system clock, shown as block 31 of Fig. 1. An oscillator 101 operates at a relatively high frequency and drives a counter 103. The counter 103 is a binary counter. Each stage (103a and 103b) of counter 103 reduces the frequency by a factor of 2. For example, if oscillator 101 operates at 20 megacycles, it completes a full cycle every 50 nanoseconds. The output of oscillator 101 is directly applied to AND gate 107. The stage seven of register 105 is also connected to AND gate 107. If a binary 1 bit appears in stage seven of register 105, AND gate 107 provides an output to OR gate 113, which allows the output of oscillator 101 to be applied to the toggle input of flip-flop 115. Flip-flop 115 goes through a complete set and reset cycle each 100 nanoseconds. The output of flip-flop 115 is the main clock applied to the processor 11, memory 13, and adapters 21, 23 and 25. Processor 11 further counts down this 100 nanosecond clock cycle to provide the various clock phases needed by processor 11. Each clock phase, in many cases, is also of 100 nanosecond duration. In the event that a 400 nanosecond duration is needed by processor 11 in order to serve device adapter 25, for example, a binary one bit is stored in stage five of register 105 and a binary zero in stages six and seven. Stage one (103b) of counter 103 is connected to AND gate 111. Stage five of register 105, also connected to AND gate 111, determines when the twice-divided oscillator frequency is to be gated through OR gate 113 to the toggle input of flip-flop 115. Since counter 103 stage zero (103a) operates at one-half the oscillator frequency, and stage one (103b) operates at one-fourth the oscillator frequency, flip-flop 115 is set every 400 nanoseconds and reset again 200 nanoseconds later. In this way the flip-flop 115 provides a series of cycles of 400 nanosecond duration to computer 11 and adapters 21, 23, and 25. Although the circuit of Fig. 2 works well with the invention, more sophisticated known circuits (e.g., involving phase locked loops and other features) provide overall system improvements in appropriate situations. For purposes of practicing the invention, however, this circuit at Fig. 2 avoids unrelated complexity inherent in such more sophisticated clock systems.

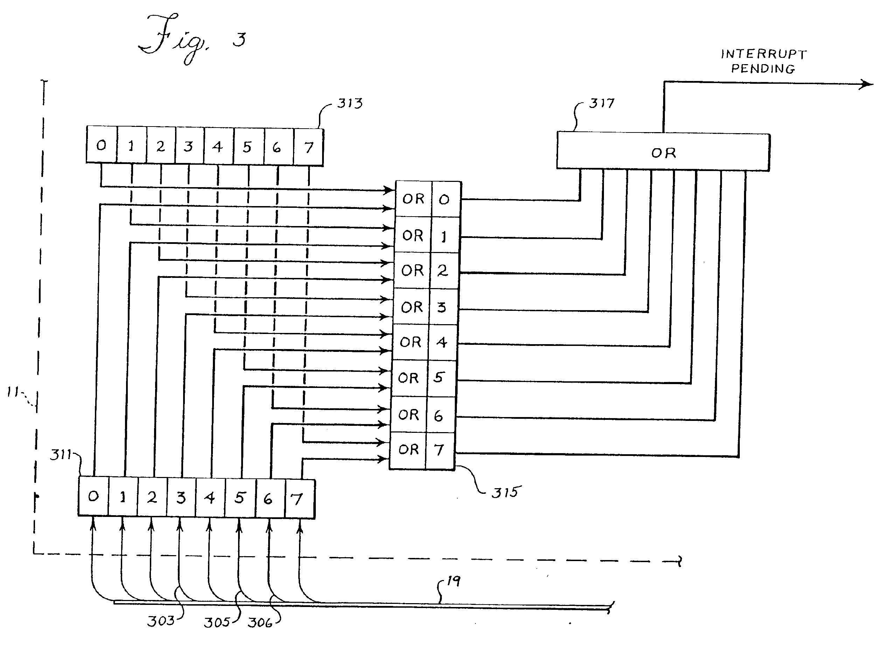

Fig. 3 shows the connections of interrupt request bus 19 in more detail. As shown in Fig. 3, interrupt request lines 305 and 306 are connected from I/O adapters 21 and 23 of Fig. 1 to stages five and six of hardware interrupt request register 311. Likewise, I/O adapter 25 in Fig. 1 is connected by interrupt request line 303 to stage three of interrupt request register 311. Other I/O adapters, not shown, may be connected to the same and other interrupt lines as needed to provide for proper prioritization of service and now, by use of this invention, proper clock speed. In addition to the interrupts stored in the hardware interrupt request register, register 313 also has 8 binary bits of storage which can be set by program instructions. Each stage, 0-7, of these two registers is individually ORed with its corresponding stage and the output connected to a corresponding stage of master interrupt request register 315. Each of the 8 stages of master interrupt request register 315 are logically ORed together by OR gate 317 to provide an interrupt request pending signal. Similar to register 313, register 315 is accessible by machine level program instructions, in this case, for reading the binary bit pattern stored in register 315. The interrupt handler program responds to the interrupt request pending signal to read the contents of register 315 and determine which interrupt will be served first. Usually, a sequence of priority from 0-7, with 0 being the highest priority and 7 being the lowest priority, is chosen. In this case, the interrupt handler program would respond to the binary bit stored in register 315 having the highest priority.

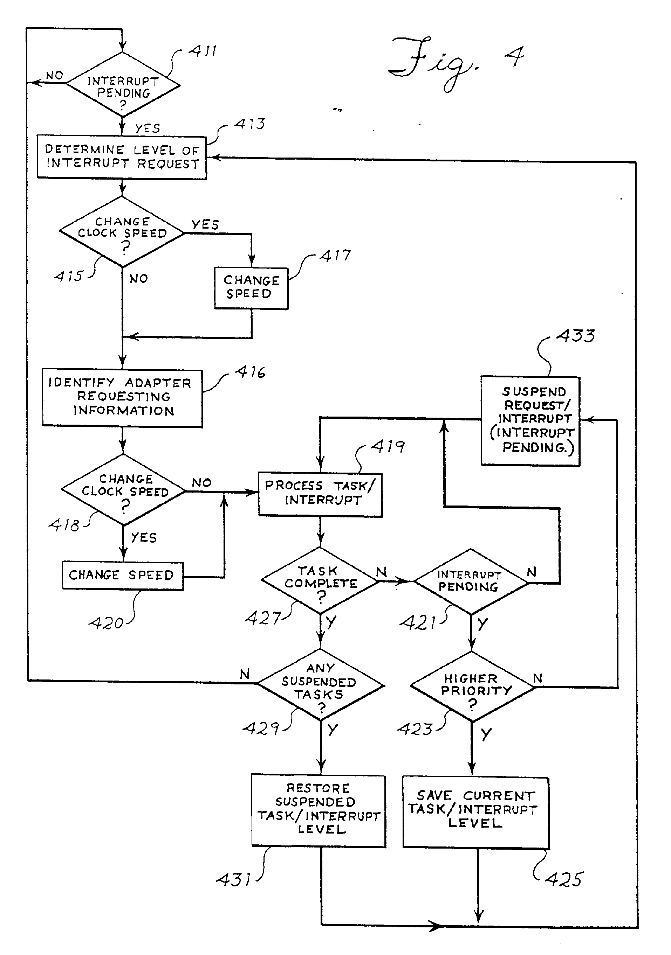

The operation of interrupt request and service, using the invention, can better be understood by referring to Fig. 4 which is a flow diagram of the operation of the invention. In this example, I/O adapters using low-speed circuitry are assigned to interrupt levels 1, 2 and 3. High speed circuitry adapters which operate at the minimum 100 nanosecond clock cycle duration are assigned to interrupt levels 4-7.

Decision block 411 responds to the output of OR gate 317 in Fig. 3 to advise the programs running in processor 11 that an interrupt is pending. The interrupt handler program then determines at block 413 which level interrupt has been received by reading the content of register 315. Having determined the interrupt level of the interrupt request which has been received, the interrupt handling program jumps to that shown in Table I for interrupt levels 1-7 and that shown in Table II for interrupt level 0.

TABLE I

```
CLIHENT TI      X9,X'70'   If this is not level 1,2,or 3
        JZ      SA1RDIO    skip engine speed modification
        DISABLE            disallow level interrupts
        IFON    NOWSLO,
        SA1KDO1            ? engine speed has been
reduced
        SETON NOWSLO        no, indicate that it now has
        OI      X7,X'40'   and it was changed on this level
        KDO     1          change engine speed
        KDO     2          to CPU speed 2 (200NS cycle time)
SA1KDO1 ENABLE             Allow level interrupts
SA1RDIO EQU *
    .
    .
    .
    .
    .
    .
    .

CLIHEXIT TI   X7,X'40'  If speed not changed at this level,
        JZ    SA1KDO2   exit without modifying engine speed
        NI    X7,X'BF'  else, clear control flag for this
                        level
        KDO   1         change engine speed
        KDO   2         to CPU speed 3 (100NS cycle time)
      ETOFF NOWSLO      clear speed modified flag
SA1KDO2   EQU   *       enable to leave this level
```

TABLE II

```
LVL0ENT   KDO 1        Change engine speed
          KDO 2          to CPU speed 2 (200NS cycle time)
          KDO 1        Change engine speed
          KDO 4          to CPU speed 1 (400NS cycle time)
            .
            .
            .
            .
            .
            .
            .

LVLOEXIT  TI  X4,X'04' ? Previous level is 4, 5, 6 or 7
          JZ  SM1KDO5    jump no, handle levels 1, 2, 3
          KDO 1        Change engine speed
          KDO 1        to CPU speed 3 (reset to 100NS speed)
          J   SM1KDO51
SM1KDO5   KDO 1        Change engine speed
          KDO 2          to CPU speed 2 (reset to 200NS
                         speed)
SM1KDO51  EQU *        Enable master mask to leave level
```

Referring, then, to Table I, let us assume that an application program has been executing on level 7 when an interrupt is received on level 3 from adapter 25. The hardware of processor 11 suspends execution of the application program at the end of the currently executing instruction and passes control to the interrupt handling program in the operating system. The interrupt handler program then determines at block 413 whether an interrupt level zero has been received by utilizing the contents of register 315. If it is a level zero interrupt, control is passed to the instruction labeled LVL0ENT (level zero interrupt entry point) in Table II. If it is not a level zero interrupt, control falls through to the instruction shown in Table I at the line labeled CLIHENT (common level interrupt handler entry point). The first instruction is a test immediate to determine if the interrupt is not one of levels one, two, or three. If it were not one of these slower speed interrupt levels the clock speed would not have to be changed and the flow would jump (JZ SA1RDIO) around the clock speed change instructions. Since it was a level three interrupt, the flow falls through to disable further interrupts before the speed is actually changed. Then the flag NOWSLO is tested for yes condition to see if the clock has already been set to slow speed by a prior interrupt 1, 2, or 3. If yes, then branch (IFON NOWSLO,SA1KDO1) around the speed change instructions and re-enable interrupts in case a higher priority interrupt occurs.

Having accounted for all no action cases, the NOWSLO flag is set by the SETON NOWSLO instruction in Table I and OI X7,X'40' sets another flag in register seven to indicate that the clock speed was changed on this level. Then KDO 1 and KDO 2 instructions are executed to load a binary one in stage 6 and a binary zero in stage 7 of register 105 in Fig. 2. This causes flip-flop 115 to run at 5 megahertz to generate the 200 nanosecond cycles needed by the adapter 25. Thereafter, control is passed to the device driver program at block 419 which serves the needs of adapter 25. Recall that interrupts have been enabled so another interrupt from another adapter could occur. Such an interrupt can suspend this device driver program at block 421 in Fig. 4 to serve a higher priority adapter at blocks 423, 425, to block 413. If not interrupted, the device driver program task proceeds to completion at block 427. At block 429 control returns to the interrupt handler to restore the application program task that had been suspended to serve adapter 25, shown in Fig. 1. The interrupt handler must restore the computer to the speed of the suspended interrupt level before control is passed back to the suspended task. This restoration is shown in detail in the instructions at the end of Table I labeled CLIHEXIT.

First a test immediate instruction (TI) is executed to test for the flag in register 7 which indicates that the clock speed was changed when interrrupt level 3 was entered. If not changed, the program in Table I moves to jump on zero (JZ) to the exit point SA1KDO2. Otherwise the flags are cleared and the speed is changed back to the higher speed.

The instructions in Table II operate in similar fashion to change the speed of the computer to 400 nanosecond cycle time for level zero interrupts.

In another example of a computer configuration using the invention, several I/O adapters are connected to the computer on a same interrupt level, and some of these adapters may operate at slower speeds than the others are capable of operating. Such attachment on the same interrupt level can be necessary in order to satisfy both priority and speed demands made by the I/O device adapter being attached.

Improved performance can be obtained by restoring the computer execution speed to the speed of a faster I/O adapter after determining that the interrupting adapter circuits can operate at the faster speed. This is accomplished by maintaining a table of adapter speeds in a polling list along with other information about the adapter such as address, adapter type, pointer to the device driver program, and so forth.

The computer is changed to the speed of the slowest adapter circuits on the interrupt level in order to reliably poll the adapters for identification of the interrupting adapter at block 416 in Fig. 4. Once the interrupting adapter has been identified, the polling list speed entry for that adapter is used to match the computer execution speed at blocks 418 and 420 of Fig. 4, to that of the adapter while the device driver program is serving that adapter.

## Claims

1.  A computer system having a processing unit (11), a memory (13) and a variable frequency clock (31), the frequency of said clock being controlled by a value stored in a register (105), said computer further comprising:
    a plurality of first input/output adapter circuits (21), each of said first input/output adapter circuits (21) being connected to said processing unit by a first interrupt line (306), said processing unit responding to a signal on said first interrupt line by executing first programmed instructions at a first clock frequency; characterized by further comprising a plurality of second input/output adapter circuits (23, 25), each of said second input/output adapter circuits being connected to said processing unit (11) by a second interrupt line (305, 303), said second input/output adapter circuits (23, 25) being capable of operating at a second clock frequency;
    interrupt programmed instructions stored in said memory (13), said processing unit (11) executing said interrupt programmed instructions in response to an interrupt signal from any one of said second input/output adapter circuits (23, 25), said interrupt programmed instructions saving a copy of a first value stored in said register (105) and then changing said first value in said register to a second value in order to change the frequency of said clock from said first clock frequency to said second clock frequency;
    second programmed instructions stored in said memory (13), said processing unit (11) executing said second programmed instructions for performing functions required by said any one of said second input/output adapter circuits (23, 25);
    return programmed instructions stored in said memory (13), said processing unit (11) after executing said second programmed instructions, executing said return programmed instructions for retrieving said saved copy of said first value and changing said second value stored in said register (105) back to said first value prior to returning to said previously executing first programmed instructions in order that said clock frequency be restored to said first clock frequency at which it was operating when said interrupt occurred.

2.  A method of operating a computer having a variable frequency clock (31), controlled by a value stored in a register (105), comprising the steps of:
    executing a program in said computer at a first clock frequency determined by a first interrupt level;
    said computer responding to an interrupt from any one of a plurality of input/output adapter circuits (21, 23, 25) connected to said computer on another interrupt level;
    said computer saving an indication of a first value stored in said register (105);
    said computer storing in said register (105), another value determined by the level on which said interrupt was received;

said computer performing functions required by said any one of said plurality of input/output adapter circuits (21, 23, 25);

said computer retrieving said saved indication of said first value;

said computer storing said saved first value into said register (105) to restore said clock frequency to a frequency at which it was operating when said interrupt occurred; and

said computer returning control to said previously executing program.

## Patentansprüche

1. Ein Computersystem mit einer Verarbeitungseinheit (11), einem Speicher (13) und einem Takt mit veränderlicher Frequenz (31), wobei die Frequenz dieses Takts durch einen Wert gesteuert wird, der in einem Register (105) gespeichert wird; wobei der Computer weiterhin umfaßt:

eine Vielzahl von ersten E/A-Adapterschaltungen (21), wobei jede der ersten E/A-Adapterschaltungen (21) durch eine erste Unterbrechungsleitung (306) an die Verarbeitungseinheit angeschlossen ist und die Verarbeitungseinheit auf ein Signal auf der ersten Unterbrechungsleitung dadurch anspricht, daß sie die ersten programmierten Anweisungen bei einer ersten Taktfrequenz ausführt;

dadurch gekennzeichnet ist, daß er eine Vielzahl von zweiten E/A-Adapterschaltungen (23, 25) umfaßt, wobei jede der zweiten E/A-Adapterschaltungen durch eine zweite Unterbrechungsleitung (303, 305) an die Verarbeitungseinheit (11) angeschlossen ist und die zweiten E/A-Adapterschaltungen (23, 25) bei einer zweiten Taktgeschwindigkeit arbeiten können;

unterbrechungsprogrammierte Anweisungen, die im Speicher (13) gespeichert sind, wobei die Verarbeitungseinheit (11) die unterbrechungsprogrammierten Anweisungen als Antwort auf ein von einer der zweiten E/A-Adapterschaltungen (23, 25) kommendes Unterbrechungssignal ausführt und wobei durch die unterbrechungsprogrammierten Anweisungen die Kopie eines ersten im Register (105) gespeicherten Wertes gesichert und dann dieser erste Wert in dem Register in einen zweiten Wert umgewandelt wird, so daß die Frequenz des Takts von der ersten Taktfrequenz in die zweite Taktfrequenz umgewandelt wird;

zweite programmierte Anweisungen, die in dem Speicher (13) gespeichert sind, wobei die Verarbeitungseinheit (11) diese zweiten programmierten Anweisungen ausführt, um Operationen durchzuführen, die eine dieser zweiten E/A-Adapterschaltungen (23, 25) erfordert;

programmierte Rücksprunganweisungen, die in dem Speicher (13) gespeichert sind, wobei die Verarbeitungseinheit (11) diese programmierten Rücksprunganweisungen nach Ausführung der zweiten programmierten Anweisungen ausführt, um die gesicherte Kopie des ersten Wertes wiederaufzufinden und den zweiten in Register (105) gespeicherten Wert vor der Rückkehr zu den vorher ausgeführten ersten programmierten Anweisungen wieder in den ersten Wert umzuwandeln, so daß die Taktfrequenz wieder auf die erste Taktfrequenz, bei der sie arbeitete, als die Unterbrechung eintrat, zurückgestellt wird.

2. Ein Verfahren, einen Computer zu betreiben, der einen Takt mit veränderlicher Frequenz (31) besitzt, der durch einen in einem Register (105) gespeicherten Wert gesteuert wird, wobei das Verfahren folgende Schritte umfaßt:

Ausführung eines Programms im Computer bei einer ersten Taktfrequenz, die durch eine erste Unterbrechungsebene bestimmt wird;

Ansprechen des Computers auf eine Unterbrechung, die von einer der E/A-Adapterschaltungen (21, 23, 25) kommt, die an den Computer auf einer anderen Unterbrechungsebene angeschlossen ist;

Sichern einer Anzeige eines im Register (105) gespeicherten ersten Wertes durch den Computer;

Speichern eines weiteren Wertes im Register (105) durch den Computer, wobei der Wert durch die Ebene bestimmt wird, auf der die Unterbrechungsanforderung empfangen wurde;

Ausführen von Operationen durch den Computer, die eine beliebige der E/A-Adapterschaltungen (21, 23, 25) erfordert;

Wiedergewinnung der gesicherten Anzeige des ersten Wertes durch den Computer;

Speichern des gesicherten ersten Wertes durch den Computer im Register (105), um die Taktfrequenz auf eine Frequenz zurückzustellen, bei der er arbeitete, als die Unterbrechung eintrat; sowie

Rückführung der Steuerung auf das zuvor ablaufende Programm durch den Computer.

**Revendications**

1. Système d'ordinateur comportant une unité de traitement (11), une mémoire (13) et une horloge à fréquence variable (31), la fréquence de ladite horloge étant commandée par une valeur emmagasinée dans un registre (105), ledit système d'ordinateur comprenant en outre :

une pluralité de premiers circuits adaptateurs d'entrée/sortie (21), chacun desdits premiers circuits adaptateurs d'entrée/sortie (21) étant connecté à ladite unité de traitement par une première ligne d'interruption (306), ladite unité de traitement répondant à un signal sur ladite ligne d'interruption en exécutant des premières instructions programmées à une première fréquence d'horloge;

caractérisé en ce qu'il comprend en outre :

une pluralité de seconds circuits adaptateurs d'entrée/sortie (23,25), chacun desdits seconds circuits adaptateurs d'entrée/sortie étant connecté à ladite unité de traitement (11) par une seconde ligne d'interruption (305, 303), lesdits seconds circuits adaptateurs d'entrée/sortie (23, 25) étant capables de fonctionner à une seconde fréquence d'horloge,

des instructions programmées d'interruption emmagasinées dans ladite mémoire (13), ladite unité de traitement (11) exécutant lesdites instructions programmées d'interruption en réponse à un signal d'interruption de l'un desdits seconds circuits adaptateurs d'entrée/sortie (23, 25), lesdites instructions programmées d'interruption sauvegardant une copie d'une première valeur emmagasinée dans ledit registre (105) et changeant ensuite ladite première valeur dans ledit registre en une seconde valeur de façon à changer la fréquence de ladite horloge de ladite première fréquence d'horloge à ladite seconde fréquence d'horloge,

des secondes instructions programmées emmagasinées dans ladite mémoire (13), ladite unité de traitement (11) exécutant lesdites secondes instructions programmées pour effectuer des fonctions demandées par un desdits seconds circuits adaptateurs d'entrée/sortie (23, 25),

des instructions programmées de retour emmagasinées dans ladite mémoire (13), ladite unité de traitement (11), après exécution desdites secondes instructions programmées, exécutant lesdites instructions programmées de retour pour rechercher ladite copie sauvegardée de ladite première valeur et changer ladite seconde valeur emmagasinée dans ledit registre (105) en ladite première valeur avant de retourner auxdites premières instructions qui s'exécutaient précédemment de manière à ce que ladite horloge soit restaurée à ladite première fréquence d'horloge à laquelle elle fonctionnait lorsque ladite interruption s'est produite.

2. Méthode de fonctionnement d'un ordinateur comportant une horloge à fréquence variable (31), commandée par une valeur emmagasinée dans un registre (105), comprenant les étapes de :

exécuter un programme dans ledit ordinateur à une première fréquence d'horloge déterminée par un premier niveau d'interruption,

ledit ordinateur répondant à une interruption de l'un d'une pluralité de circuits adaptateurs d'entrée/sortie (21, 23, 25) connectés audit ordinateur sur un autre niveau d'interruption,

ledit ordinateur sauvegardant une indication d'une première valeur emmagasinée dans ledit registre (105),

ledit ordinateur emmagasinant dans ledit registre (105) une autre valeur déterminée par le niveau auquel ladite interruption a été reçue,

ledit ordinateur effectuant des fonctions demandées par un de ladite pluralité de circuits adaptateurs d'entrée/sortie (21, 23, 25),

ledit ordinateur recherchant ladite indication sauvegardée de ladite première valeur,

ledit ordinateur emmagasinant ladite première valeur sauvegardée dans ledit registre (105) pour restaurer ladite horloge à une fréquence à laquelle elle fonctionnait lorsque ladite interruption s'est produite, et

ledit ordinateur retournant la commande audit programme qui s'exécutait précédemment.

Fig. 1

Fig. 2

Fig. 3

INTERRUPT
PENDING

EP 0 363 567 B1

Fig. 4